(19) Europäisches Patentamt
European Patent Office
Office européen des brevets

(11) **EP 1 029 901 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.$^7$: **C09D 5/08**, C09C 3/06

(21) Anmeldenummer: **00100416.7**

(22) Anmeldetag: **10.01.2000**

(54) **Anorganische Korrosionsschutz-Kombinationspigmente und Verfahren zu deren Herstellung**

Inorganic anti-corrosive combined pigments and method for the production thereof

Pigments inorganiques anti-corrosion combinés et leur procédé de préparation

(84) Benannte Vertragsstaaten:
**DE ES FR GB IT**

(30) Priorität: **17.02.1999 DE 19906485**

(43) Veröffentlichungstag der Anmeldung:
**23.08.2000 Patentblatt 2000/34**

(73) Patentinhaber: **Sachtleben Chemie GmbH**
**47198 Duisburg (DE)**

(72) Erfinder:
• **Rentschler, Thomas, Dr.**
**47802 Krefeld (DE)**
• **Föhr, Kirsten**
**47475 Kamp-Lintfort (DE)**
• **Müller, Friedrich**
**47198 Duisburg (DE)**

(74) Vertreter: **Uppena, Franz, Dr. et al**
**Dynamit Nobel Aktiengesellschaft,**
**Patente, Marken & Lizenzen**
**53839 Troisdorf (DE)**

(56) Entgegenhaltungen:
EP-A- 0 221 473          EP-A- 0 389 653
GB-A- 1 149 275          US-A- 5 006 588

• CHEMICAL ABSTRACTS, vol. 108, no. 12, 21. März 1988 (1988-03-21) Columbus, Ohio, US; abstract no. 96259, XP002096283 & CS 235 887 A (NEDOROST MIROSLAV) 1. März 1987 (1987-03-01)

**Beschreibung**

Die Erfindung betrifft anorganische Korrosionsschutz-Kombinationspigmente für Formulierungen für Grundanstriche und -beschichtungen auf Metallen, bestehend aus einem ein oder mehrere Pigmente, ausgewählt aus Phosphat-, Polyphosphat- und Metalloxid-Pigmenten, und einen Füllstoff enthaltenden Gemisch.

Im Hinblick auf die Vermeidung von durch Korrosion verursachte Schäden, insbesondere an eisenhaltigen Werkstoffen, spielt die Wirkung von Korrosionsschutzpigmenten eine erhebliche Rolle. Dabei werden drei typische Wirkungsweisen unterschieden.

Pigmente mit physikalischer Korrosionsschutzwirkung sind chemisch inert und werden als inaktive bzw. passive Pigmente bezeichnet, deren Wirkungsweise darin besteht, daß sie die Diffusionswege für Wasser, Sauerstoff und korrosionsfördernde Ionen erheblich verlängern und die Untergrundhaftung des Anstrichs und der Beschichtung verbessern. Ein Beispiel für ein solches passives Korrosionsschutz bewirkenden Pigments ist Eisenglimmer.

Pigmente mit chemischer Korrosionsschutzwirkung zeigen eine bestimmte Löslichkeit und sind in der Lage, bestimmte pH-Werte in der Beschichtung zu stabilisieren. Solche Pigmente werden als aktiv bezeichnet. Ihre Wirkungsweise basiert auf Wechselwirkungen im Grenzflächenbereich zwischen Pigment und Untergrund, Pigment und Bindemittel sowie Pigment und eingedrungenen Fremdionen. Dabei können sich Redoxreaktionen abspielen, so daß neue schützende Verbindungen entstehen können. Durch Seifenbildung mit dem Bindemittel bzw. Neutralisation der sauren Abbauprodukte bleibt in der Beschichtung ein bestimmter pH-Wert weitgehend eingestellt. Es werden die korrosionsaktiven Ionen eliminiert. Als Beispiel ist hier Zinkoxid zu nennen.

Pigmente mit elektrochemischer Korrosionsschutzwirkung wirken passivierend auf die zu schützenden Metalloberflächen. Die Korrosionsschutzpigmente werden danach beurteilt, ob sie im anodischen Bereich" oder im kathodischen Bereich" wirksam sind. Pigmente, die die Auflösung des Eisens durch Schutzschichtenbildung verhindern, werden als im anodischen Bereich wirksam bezeichnet. Pigmente, die aufgrund ihres hohen Oxidationspotentials die Rostbildung unterbinden, werden als im kathodischen Bereich wirksam bezeichnet. Beispiele für im anodischen Bereich wirksame Pigmente sind Phosphate, für im kathodischen Bereich wirksame Pigmente sind es Chromate.

Die zunehmende Bedeutung des Korrosionsschutzes und die Erkenntnisse zu den Gesundheitsgefahren, die von bekannten blei- und chromathaltigen Korrosionsschutzpigmenten ausgehen, haben zur Weiterentwicklung der toxikologisch unbedenklicheren Korrosionsschutzpigmente auf der Basis von Phosphaten, insbesondere $Zn_3(PO_4)_2$, gegebenenfalls in Kombination mit $AlPO_4$, ZnO sowie Molybdat-Wolframat- und Zirkonat-Pigmenten, metallischem Zink, organischen Pigmenten und reinen Barriere-Pigmenten, wie Eisenglimmer, geführt. Bekannt sind auch Korrosionsschutzpigmente aus Kombinationen von Phosphaten mit Boraten oder Silikaten (Ruf, J.: Anorganischer Metallschutz, Vincentz-Verlag, Hannover, 1993, insbesondere Seiten 248 bis 289).

Neben der Entwicklung von Korrosionsschutz-Pigmentkombinationen, wie solche beispielsweise aus der DE-A-27 14 138 und der DE-B-25 02 781 bekannt sind, spielt auch die Weiterentwicklung und Verbesserung der einzelnen Komponenten der Korrosionsschutz-Pigmentkombinationen eine Rolle im Hinblick auf eine Verbesserung des Korrosionsschutzes durch synergetische Effekte (DE-A-23 40 820, DE-A-26 56 779). Die Pigmentkombinationen werden entweder als Mischung oder als Einzelkomponenten in das Bindemittel, z. B. Alkydharz, eingebracht.

Neben einer Verbesserung des Korrosionsschutzes durch die einzelnen Pigmente und die Pigmentkombinationen kommt auch der korrosionsinhibierenden Wirkung der benutzten Füllstoffe eine wachsende Bedeutung zu. Füllstoffe sollen einerseits im klassischen Sinne ein Produkt verbilligen, andererseits sollen sie auch für verbesserte und zusätzlich neue Eigenschaften des Produkts sorgen.

Aufgabe der vorliegenden Erfindung ist es, die eingangs beschriebene anorganische Korrosionsschutz-Pigmentkombination im Hinblick auf eine verbesserte Korrosionsschutzwirkung für Grundanstriche und -beschichtungen weiterzuentwickeln.

Die Lösung dieser Aufgabe erfolgt dadurch, daß Korrosionsschutzpigment und Füllstoff gemeinsam gefällt (Kopräzipitation) sind, wobei der Füllstoff $BaSO_4$ ist. Dieses Kombinationspigment besitzt eine mittlere Korngröße $d_{50}$ von 0,1 bis 5,0 μm, vorzugsweise 0,4 bis 2,0 μm. Das bzw. die Pigmente liegen homogen verteilt im Bindemittel vor, so daß wegen der größeren spezifischen Oberfläche der aktiven Komponenten eine verbesserte Korrosionsinhibierung erreicht wird.

Die Merkmale der Patentansprüche 2 bis 5 stellen vorzugsweise Ausgestaltungen der anorganischen Korrosionsschutz-Pigmentkombination gemäß Anspruch 1 dar.

Zur Herstellung der durch Kopräzipitation gewonnenen anorganischen Korrosionsschutz-Pigmentkombination wird eine wäßrige Lösung oder Suspension von $Ba_3(PO_4)_2$ und/oder $Ba(OH)_2$ und/oder $Ba(PO_3)_3$ bei einer Temperatur von 40 bis 100°C mit einer wäßrigen Lösung von $ZnSO_4$ und/oder $MnSO_4$ und/oder $Al_2(SO_4)_3$ vermischt.

Im folgenden sind Kopräzipitate angegeben, die gemäß den angegebenen Reaktionsgleichungen als Korrosionsschutz-Pigmentkombinationen vorzugsweise in Betracht kommen:

**Phosphatpigmente**

$$Ba_3(PO_4)_2 + 3ZnSO_4 \rightarrow 3BaSO_4 + Zn_3(PO_4)_3 \tag{1}$$

$$Ba_3(PO_4)_3 + 3MnSO_4 \rightarrow 3BaSO_4 + Mn_3(PO_4)_2 \tag{2}$$

$$Ba_3(PO_4)_2 + 3(Mn,Zn)SO_4 \rightarrow 3BaSO_4 + (Mn,Zn)_3(PO_4)_2 \tag{3}$$

$$Ba_3(PO_4)_2 + Al_2(SO_4)_3 \rightarrow 3BaSO_4 + 2AlPO_4 \tag{4}$$

$$2Ba_3(PO_4)_2 + 3ZnSO_4 + Al_2(SO_4)_3 \rightarrow 6BaSO_4 + 2AlPO_4 + Zn_3(PO_4)_2 \tag{5}$$

$$2Ba_3(PO_4)_2 + 3MnSO_4 + Al_2(SO_4)_3 \rightarrow 6BaSO_4 + 2AlPO_4 + Mn_3(PO_4)_2 \tag{6}$$

$$2Ba_3(PO_4)_2 + 3(Mn,Zn)SO_4 + Al_2(SO_4)_3 \rightarrow 6BaSO_4 + 2AlPO_4 + (Mn, Zn)_3PO_4)_2 \tag{7}$$

**Oxidische Pigmente**

$$Ba(OH)_2 + ZnSO_4 \rightarrow BaSO_4 + ZnO + H_2O \tag{8}$$

$$3Ba(OH)_2 + Al_2(SO_4)_3 \rightarrow 3BaSO_4 + 2AlOOH + 2H_2O \tag{9}$$

**Phosphat und oxidische Pigmente**

$$\{Ba(OH)_2/Ba_3(PO_4)_2\} + ZnSO_4 \rightarrow BaSO_4 + ZnO + H_2O + Zn_3(PO_4)_2 \tag{10}$$

$$\{Ba(OH)_2/Ba_3(PO_4)_2\} + Al_2(SO_4)_3 \rightarrow BaSO_4 + AlOOH + H_2O + AlPO_4 \tag{11}$$

**Polyphosphate**

$$Ba(PO_3)_2 + (Zn,Mn)SO_4 \rightarrow BaSO_4 + (Zn,Mn)(PO_3)_2 \tag{12}$$

$$3Ba(PO_3)_2 + Al_2(SO_4)_3 \rightarrow 3BaSO_4 + 2Al(PO_3)_3 \tag{13}$$

$$4Ba(PO_3)_2 + (Mn,Zn)SO_4 + Al_2(SO_4)_3 \rightarrow 4BaSO_4 + 2Al(PO)_3 + (Mn,Zn)(PO_3)_2 \qquad (14)$$

**Polyphosphate und oxidische Pigmente**

$$\{Ba(OH)_2/Ba(PO_3)_2\} + ZnSO_4 \rightarrow BaSO_4 + ZnO + H_2O + Zn(PO_3)_2 \qquad (15)$$

$$\{Ba(OH)_2/Ba(PO_3)_2\} + Al_2(SO_4)_3 \rightarrow BaSO_4 + ALOOH + H_2O + Al(PO_3)_3 \qquad (16)$$

Phosphate und Polyphosphate können gleichzeitig nebeneinander verwendet werden. Die Erfindung ist nachstehend anhand mehrerer Ausführungsbeispiele näher erläutert.

1. Ausführungsbeispiel

Aus einer wäßrigen Suspension von $Ba(OH)_2 \cdot 8H_2O$, enthaltend 4500 g $BaSO_4$, wird unter Zugabe von 40 %-iger Essigsäure eine klare Lösung hergestellt und unter ständigem Rühren auf eine Temperatur von 80°C erhitzt. Bei einer Zugabe innerhalb 90 Minuten von 3100 ml $H_3PO_4$, eine Konzentration von 218 g $P_2O_5$/l enthaltend, entsteht eine Suspension des unter diesen Bedingungen unlöslichen Bariumphosphates. Das Einstellen und Halten des pH-Wertes erfolgt mit 50 %-iger NaOH-Lösung. Unter ständigem Rühren werden bei einem pH-Wert von 6 im weiteren 10680 ml einer Zinksulfatlösung mit einem Gehalt von 87,3 g Zn/l zugegeben. Hierbei entsteht neben dem schwerlöslichen $BaSO_4$ als weiteres Fällungsprodukt $Zn_3(PO_4)_2 \cdot xH_2O$. Nach einer Reifezeit von ca. 2 Stunden unter ständigem Rühren bei vorgegebener Temperatur und Kontrolle des pH-Wertes wird das entstandene Produkt abfiltriert, mit deionisiertem Wasser gewaschen, getrocknet und im Falle möglichst feinteiligen Materials anschließend strahlgemahlen.
Das erhaltene Produkt kann einem zusätzlichen, optionalen Glühprozeß unterworfen werden.
Röntgenographische Untersuchungen des pulverförmigen Materials zeigten ausschließlich das erwünschte zweiphasige Diagramm, zusammengesetzt aus $BaSO_4$ und $Zn_3(PO_4)_2 \cdot xH_2O$.

2. Ausführungsbeispiel

Die Verfahrensweise erfolgt analog zu dem 1. Ausführungsbeispiel. Anstelle der Zinksulfat-Lösung wird, in stöchiometrischem Verhältnis zu der vorliegenden Suspension an Bariumorthophosphat, nunmehr eine Lösung, die gleichzeitig $MnSO_4$ und $ZnSO_4$ enthält, zugegeben und in entsprechender Weise aufgearbeitet. Bei dem erhaltenen Produkt wird auf den Glühprozeß verzichtet, da mit diesem eine starke Braunfärbung des Produktes einhergeht, aufgrund der Bildung von Braunstein.
Mittels dieser Verfahrensmaßnahmen können die erfindungsgemäßen Korrosionsschutz-Kombinationspigmente hergestellt werden, und zwar unter der Auswahl der gewünschten, aktiv korrosionsschützenden Komponente, die gemeinsam mit dem $BaSO_4$/Füllstoff als Kopräzipitat ausgefällt wird.
Diese Korrosionsschutz-Kombinationspigmente werden in unterschiedlichen Pigmentvolumenkonzentrationen (PVK), d. h. dem Verhältnis des Gesamtvolumens des Korrosionsschutzpigmentes in einem Produkt zum Gesamtvolumen aller nichtflüchtigen Anteile, in Lackrezepturen eingebracht.
Nachfolgend ist ein Beispiel eines lösungsmittelbasierenden Alkyd-Beschichtungssystems (Angaben in Gewichtsprozent als Feststoff gerechnet) wiedergeben: Alkydharz (kurzölig) 20 %, Phenolharz 5 %, $TiO_2$ 6,5 %, Korrosionsschutz-Kombinationspigment 13 %, Schwerspat 6 %, Talkum 8 %, Hautverhunderungsmittel (Oxin) 0,4 %, Bentone 1 %, Sikkativ 0,06 %, Rest zu 100 %: Lösungsmittel Xylol, Glykole, Butylacetat. Die Anteile der Pigmente und Füllstoffe können entsprechend den Anforderungen variiert werden.
Die Komponenten werden hierbei mit einem Dissolver vermischt bzw. vordispergiert und anschließend über eine Permühle dispergiert. Mit diesem Ansatz können beispielsweise anwendungstechnische Salzsprühnebelprüfungen gemäß DIN 61167 durchgeführt werden, indem das Beschichtungssystem auf entfettete Bleche von 100 x 150 x 1 mm aufgeschleudert, getrocknet und anschließend in spezielle Salzsprühnebelkammern eingebracht wird.

**Patentansprüche**

1. Anorganische Korrosionsschutz-Pigmentkombination für Formulierungen für Grundanstriche und -beschichtungen auf Metallen, bestehend aus einem ein oder mehrere Pigmente, ausgewählt aus Phosphat-, Polyphosphat-und Metalloxid-Pigmenten und einen Füllstoff enthaltenden Gemisch, **dadurch gekennzeichnet, daß** Pigment(e) und Füllstoff gemeinsam gefällt sind und der Füllstoff $BaSO_4$ ist.

2. Korrosionsschutz-Pigmentkombination nach Anspruch 1, **dadurch gekennzeichnet, daß** die Pigmente $Zn_3(PO_4)_2$, $Mn_3(PO_4)_2$, $AlPO_4$, $Zn(PO_3)_2$, $Mn(PO_3)_2$, $Al(PO_3)_3$, $ZnO$, $Zn(OH)_2$, $Al_2O_3$, $Al(OH)_3$ und $AlOOH$ sind.

3. Korrosionsschutz-Pigmentkombination nach einem der Ansprüche 1 und 2, **gekennzeichnet durch** eine mittlere Korngröße $d_{50}$ von 0,1 bis 5,0 μm.

4. Korrosionsschutz-Pigmentkombination nach Anspruch 3, **gekennzeichnet durch** eine mittlere Korngröße $d_{50}$ von 0,4 bis 2,0 μm.

5. Korrosionsschutz-Pigmentkombination nach einem der Ansprüche 1 bis 4, **dadurch gekennzeichnet, daß** die Pigmentvolumenkonzentration im Anstrichstoff 2 bis 50 %, vorzugsweise 5 bis 25 %, beträgt.

6. Verfahren zur Herstellung der anorganischen Korrosionsschutz-Pigmentkombination für Formulierungen für Grundanstriche und -beschichtungen auf Metallen, bestehend aus einem Gemisch, das ein oder mehrere Pigmente, ausgewählt aus Phosphat-, Polyphosphat- und Metalloxid-Pigmenten und einen Füllstoff enthält, wobei Pigmente und Füllstoff gemeinsam gefällt sind, **dadurch gekennzeichnet, daß** eine wäßrige Lösung oder Suspension von $Ba_3(PO_4)_2$ und/oder $Ba(OH)_2$ und/oder $Ba(PO_3)_4$ bei einer Temperatur von 40 bis 100°C mit einer wäßrigen Lösung von $ZnSO_4$ und/oder $MnSO_4$ und/oder $Al_2(SO_4)_3$ vermischt wird.

**Claims**

1. Inorganic anticorrosive combination pigment for metal primer paint and coating formulations, consisting of a mixture containing one or more pigments selected from phosphate, polyphosphate and metal oxide pigments, and a filler, **characterized in that** the pigment(s) and the filler are coprecipitated and the filler is $BaSO_4$.

2. Anticorrosive combination pigment according to Claim 1, **characterized in that** the pigments are $Zn_3(PO_4)_2$, $Mn_3(PO_4)_2$, $AlPO_4$, $Zn(PO_3)_2$, $Mn(PO_3)_2$, $Al(PO_3)_3$, $ZnO$, $Zn(OH)_2$, $Al_2O_3$, $Al(OH)_3$ and $AlOOH$.

3. Anticorrosive combination pigment according to Claim 1 or 2, **characterized in that** it has a mean particle size $d_{50}$ of 0.1 to 5.0 μm.

4. Anticorrosive combination pigment according to Claim 3, **characterized in that** it has a mean particle size $d_{50}$ of 0.4 to 2.0 μm.

5. Anticorrosive combination pigment according to one of Claims 1 to 4, **characterized in that** the pigment volume concentration in the paint is 2 to 50%, preferably 5 to 25%.

6. Process for the preparation of the inorganic anticorrosive combination pigment for metal primer paint and coating formulations, consisting of a mixture containing one or more pigments selected from phosphate, polyphosphate and metal oxide pigments, and a filler, the pigments and the filler being coprecipitated, **characterized in that** an aqueous solution or suspension of $Ba_3(PO_4)_2$ and/or $Ba(OH)_2$ and/or $Ba(PO_3)$ is mixed with an aqueous solution of $ZnSO_4$ and/or $MnSO_4$ and/or $Al_2(SO_4)_3$ at a temperature of 40 to 100°C.

**Revendications**

1. Combinaison pigmentaire minérale anticorrosion pour des préparations pour couches de fond et revêtements de fond sur des métaux, qui est constituée d'un mélange contenant un ou plusieurs pigments, choisis parmi les pigments phosphate, les pigments polyphosphate et les pigments oxyde métallique, et une charge, **caractérisée en ce que** le pigment ou les pigments et la charge sont précipités ensemble et **en ce que** la charge est du sulfate de

baryum $BaSO_4$.

2. Combinaison pigmentaire anticorrosion selon la revendication 1, **caractérisée en ce que** les pigments sont $Zn_3$ $(PO_4)_2$, $Mn_3(PO_4)_2$, $AlPO_4$, $Zn(PO_3)_2$, $Mn(PO_3)_2$, $Al(PO_3)_3$, $ZnO$, $Zn(OH)_2$, $Al_2O_3$, $Al(OH)_3$ et $AlOOH$.

3. Combinaison pigmentaire anticorrosion selon la revendication 1 ou 2, **caractérisée par** une taille de grain moyenne $d_{50}$ de 0,1 à 5,0 µm.

4. Combinaison pigmentaire anticorrosion selon la revendication 3, **caractérisée par** une taille de grain moyenne $d_{50}$ de 0,4 à 2,0 µm.

5. Combinaison pigmentaire anticorrosion selon l'une quelconque des revendications 1 à 4, **caractérisée en ce que** la proportion en volume de pigment dans le produit de revêtement atteint 2 à 50 %, de préférence 5 à 25 %.

6. Procédé de préparation de combinaison pigmentaire minérale anticorrosion pour des préparations pour couches de fond et revêtements de fond sur des métaux, constituée d'un mélange contenant un ou plusieurs pigments, choisis parmi les pigments phosphate, les pigments potyphosphate et les pigments oxyde métallique, et une charge, les pigments et la charge étant précipités ensemble, procédé **caractérisé en ce que** l'on mélange une solution ou une suspension aqueuse de $Ba_3(PO_4)_2$ et/ou $Ba(OH)_2$ et/ou $Ba(PO_3)_2$, à une température de 40 à 100 °C, avec une solution aqueuse de $ZnSO_4$ et/ou $MnSO_4$ et/ou $Al_2(SO_4)_3$.